# EUROPÄISCHE PATENTSCHRIFT

(11) **EP 1 601 562 B1**
(45) Veröffentlichungstag und Bekanntmachung des Hinweises auf die Patenterteilung: **19.12.2007**
(21) Anmeldenummer: 04718957.6
(22) Anmeldetag: 10.03.2004
(51) Int. Cl.: B60T 8/40, B60T 13/14, B60T 13/52

(54) **BREMSKRAFTERZEUGER FÜR EINE HYDRAULISCHE KRAFTFAHRZEUGBREMSANLAGE UND HYDRAULISCHE KRAFTFAHRZEUGBREMSANLAGE**
BRAKE POWER GENERATOR FOR A HYDRAULIC MOTOR VEHICLE BRAKE SYSTEM, AND HYDRAULIC MOTOR VEHICLE BRAKE SYSTEM
GENERATEUR DE FORCE DE FREINAGE POUR UN SYSTEME DE FREINAGE DE VEHICULE HYDRAULIQUE, ET SYSTEME DE FREINAGE DE VEHICULE HYDRAULIQUE

(30) Priorität: 13.03.2003 DE 10311060
(43) Veröffentlichungstag der Anmeldung: 07.12.2005
(73) Patentinhaber: Lucas Automotive GmbH, 56070 Koblenz (DE)
(72) Erfinder: OHLIG, Benedikt, 56179 Vallendar (DE); GIERING, Wilfried, 56743 Mending (DE); MICHELS, Erwin, 56829 Kail (DE); STEINHEUER, Herbert, 53474 Bad Neuenahr (DE)
(74) Vertreter: Thum, Bernhard
(86) Internationale Anmeldenummer: PCT/EP2004/002459
(87) Internationale Veröffentlichungsnummer: WO 2004/080772

(56) Entgegenhaltungen:
- EP-B- 1 003 658
- EP-B- 1 070 006
- WO-A-98/34821
- DE-A- 3 236 582
- DE-A- 3 600 729
- DE-A- 4 239 386
- DE-A- 19 546 647

## Beschreibung

Die Erfindung betrifft einen Bremskrafterzeuger für eine hydraulische Bremsanlage mit den Merkmalen des Patentanspruchs 1.

Derartige Bremskrafterzeuger sind aus dem Stand der Technik bekannt und werden in elektrohydraulischen Bremssystemen eingesetzt, bei welchen im Normalbetrieb ein zu betätigendes Bremspedal vollkommen mechanisch von dem nachgeschalteten Bremssystem entkoppelt ist. Diese mechanische Entkoppelung des Bremspedals von dem eigentlichen Bremssystem hat den Vorteil, dass der Fahrerwunsch gemäß einer Pedalbetätigung sensorisch erfasst wird und nach Maßgabe der erfassten Pedalbetätigung das übrige Bremssystem elektronisch gesteuert wird. Dabei können dann weitere Parameter berücksichtigt werden, die den augenblicklichen Fahrzeugzustand kennzeichnen.

Allerdings ist es bei derartigen Bremssystemen erforderlich, für den Fall, dass Komponenten der elektronischen Steuerung oder einer Servokraftunterstützung ausfallen, einen Notbetriebsmodus bereitzustellen, in welchem auch ohne die Unterstützung der Betätigungskraft-Verstärkerstufe insbesondere ohne eine hydraulische oder pneumatische Servokraftunterstützung oder ohne elektronische Sensorelemente, eine Bremsung durchführbar ist. In einem derartigen Notbetriebsmodus soll dann verhältnismäßig schnell eine mechanische Kopplung zwischen dem Bremspedal und dem hydraulischen Bremskreislauf hergestellt werden, so dass durch die unmittelbare mechanische Kopplung auf das hydraulische Bremssystem eingewirkt und eine Bremsung initiiert werden kann.

Aus einem Ausführungsbeispiel (Figuren 2 und 3) des Dokuments EP 1 003 658 B1 ist ein Bremskrafterzeuger bekannt, welcher sowohl einen Normalbetriebsmodus als auch den Notbetriebsmodus zur Verfügung stellt. Im Normalbetrieb wird eine Pedalbetätigung über die Pedalsimulationsvorrichtung erfasst und nach Maßgabe der erfassten Pedalbetätigung eine Betätigungskraft-Verstärkerstufe angesteuert, welche dann auf das eigentliche hydraulische Bremssystem einwirkt. Die Entkopplung von Bremspedal und Primärkolben des hydraulischen Bremssystem wird mittels einer selbsthemmungsfreien Gewindeverbindung erreicht. Eine Gewindehülse dreht hierfür frei auf einem Gewindebolzen und ermöglicht somit eine kraftübertragungsfreie Linearbewegung zwischen dem mit dem Bremspedal gekoppelten Krafteingangsglied und dem Primärkolben. Im Notbremsbetrieb, d.h. wenn die Betätigungskraft-Verstärkerstufe ausfällt, wird die Gewindehülse bei der Pedalbetätigung in eine Sperrposition gedrängt, so dass der mit dem Primärkolben gekoppelte Gewindebolzen sich nicht mehr frei relativ zu der Gewindehülse bewegen kann. Vielmehr kommt es zu einem Versperren von Gewindehülse und Gewindebolzen und letztendlich zu einer kraftübertragenden Kopplung zwischen dem Krafteingangsglied und dem Primärkolben. Die Lösung gemäß der EP 1 003 658 B1 hat zwar den gewünschten Effekt einer weitgehenden mechanischen Entkopplung von Krafteingangsglied und Primärkolben im Normalbetrieb und zeigt darüber hinaus ein schnelles Ansprechverhalten im Falle des Notbetriebsmodus, sie ist allerdings verhältnismäßig aufwendig aufgebaut und erfordert eine aufwendige, da exakte, Fertigung, was ihre Herstellung verteuert.

Die EP 1 003 658 B1 zeigt ein weiteres Ausführungsbeispiel (Figur 1), welches zwar einen einfachen Aufbau aufweist, allerdings den Nachteil hat, dass es in der Notbetriebssituation erst nach einem verhältnismäßig langen Pedalweg anspricht. Ein ähnliches System ist aus der EP 1 070 006 B1 bekannt. Auch bei diesem System muss das Krafteingangsglied in der Notbetriebssituation erst einen verhältnismäßig großen Weg zurücklegen, bis eine Bremswirkung erzielt wird. Mit anderen Worten muss bei diesem Stand der Technik in einer Notbetriebssituation das Bremspedal verhältnismäßig weit niedergedrückt werden, bevor eine Bremswirkung erreicht wird.

Aus dem nächstkommenden Stand der Technik gemäß DE 36 00 729 A1 ist ein Bremskrafterzeuger bekannt, bei dem sich das Krafteingangsglied in eine Ausnehmung des Primärkolbens hinein erstreckt und innerhalb dieser Ausnehmung im Normalbetrieb in geringem Abstand zu einer korrespondierenden Anlagefläche des Primärkolbens gehalten wird. Hierzu dient eine Federanordnung, die über die Betätigungskraft-Verstärkerstufe unter Vorspannung gehalten wird. Bei einem Defekt der Betätigungskraft- Verstärkerstufe bleibt die Federanordnung wirkungslos. Betätigt der Fahrer in einer derartigen Situation die Bremse, so tritt er das Bremspedal zunächst widerstandslos durch, bis sich das Krafteingangsglied an den Primärkolben anlegt. Sodann wird eine weitere Bremspedalbetätigung auf den Primärkolben übertragen. Der Fahrer hat jedoch im ersten Moment das unangenehme Gefühl, dass sich das Bremspedal widerstandslos durchtreten lässt.

Aus dem Dokument DE 196 32 035 A1 ist ferner ein Bremskraftverstärker bekannt, bei dem die über ein Bremspedal ausgeübte Pedalbetätigungskraft unter Zwischenschaltung einer zwei Federn umfassenden Simulatorfederanordnung auf einen Primärkolben übertragen wird. Das Krafteingangsglied ist somit mit dem Primärkolben verbunden, so dass der Fahrer am Bremspedal auch Rückwirkungen vom Primärkolben spürt. Darüber hinaus ist auch eine Hilfsbremsfunktion vorgesehen, mit der hydraulisch eine Bremskraftverstärkung erfolgen kann.

Als weiterer Stand der Technik wird das Dokument DE 42 39 386 A1 genannt.

Es ist demgegenüber eine Aufgabe der vorliegenden Erfindung, einen Bremskrafterzeuger der eingangs bezeichneten Art bereitzustellen, welcher bei verhältnismäßig einfachem Aufbau im Normalbetrieb eine vollständige mechanische Entkopplung von Krafteingangsglied und Primärkolben zulässt und welcher in einer Notbetriebssituation eine schnelle Kopplung von Krafteingangsglied und Primärkolben zugunsten eines guten Ansprechverhaltens der Bremsanlage gewährleistet.

Diese Aufgabe wird durch einen Bremskrafterzeuger für eine hydraulische Kraftfahrzeugbremsanlage mit den Merkmalen des Patentanspruchs 1 erzielt.

Erfindungsgemäß ist demzufolge gewährleistet, dass im Normalbetrieb eine Betätigung des Bremspedals erfasst wird und dementsprechend die Betätigungskraft-Verstärkerstufe angesteuert wird. Diese sorgt für eine Verschiebung des Primärkolbens innerhalb des Gehäuses, so dass sich der Primärkolben innerhalb des Gehäuses mindestens so weit verlagert, wie das Krafteingangsglied in die Pedalsimulationseinrichtung eintaucht. Demnach wird im Normalbetrieb der Kontaktfortsatz dauerhaft in Abstand zu dem Krafteingangsglied gehalten, so dass eine mechanische Entkopplung von Krafteingangsglied und Primärkolben gewährleistet ist. In einer Notbetriebssituation, in welcher die Betätigungskraft-Verstärkerstufe ausgefallen ist, bewegt sich der Primärkolben zunächst eine kurze Zeit unter der Wirkung der Pedalsimulationsvorrichtung in axialer Richtung, nämlich genau so lange, bis die Bewegungswiderstände die von der Pedalsimulationsvorrichtung übertragenen Kräfte kompensieren. Ist dieser Punkt erreicht, so nähert sich das Krafteingangsglied dem Kontaktfortsatz entgegen dem Widerstand der Pedalsimulationsvorrichtung und durchläuft dabei den Lüftspalt. Sobald der Lüftspalt vom Krafteingangsglied durchlaufen wurde, legt sich das Krafteingangsglied an den Kontaktfortsatz des Primärkolbens an. Jede weitere Bewegung des Krafteingangsglieds zur Herbeiführung einer Bremswirkung wird somit direkt auf den Kontaktfortsatz übertragen und führt zu einer unmittelbaren Bewegung des Primärkolbens innerhalb des Gehäuses. In der Notbetriebssituation spricht demnach die Bremsanlage relativ schnell an, d.h. mit einer verhältnismäßig kurzen Verzögerungszeit bedingt durch die Überbrückung des Lüftspalts, so dass der Fahrer des Fahrzeugs trotz des Ausfalls der Betätigungskraft-Verstärkerstufe das Gefühl vermittelt bekommt, dass die Bremsanlage zuverlässig funktioniert.

Die Erfindung sieht ferner vor, dass die Betätigungskraft-Verstärkerstufe die Betätigungskraft hydraulisch erzeugt. Dies wird erfindungsgemäß dadurch realisiert, dass die Betätigungskraft-Verstärkerstufe einen in dem Gehäuse geführten Steuerkolben aufweist, welcher zusammen mit dem Primärkolben eine mit einer Hydraulikdruckquelle gekoppelte oder koppelbare Betätigungsdruckkammer begrenzt, wobei im Normalbetrieb durch den in der Betätigungsdruckkammer anliegenden Betätigungsdruck der Primärkolben zur Erzeugung des Bremsdrucks in dem Gehäuse verlagerbar ist und der Steuerkolben ortsfest gehalten wird und wobei sich im Falle des Versagens der Betätigungskraft-Verstärkerstufe der Steuerkolben mit dem Primärkolben mit bewegt. Demnach wird im Normalbetrieb der Primärkolben relativ zu dem ortsfest verharrenden Steuerkolben innerhalb des Gehäuses verlagert und dadurch Bremsdruck in dem Hydraulikkreislauf der Bremsanlage erzeugt. Mit anderen Worten werden Primärkolben und Steuerkolben durch den in der Betätigungsdruckkammer aufgebauten Betätigungsdruck auseinander gepresst. Fällt allerdings die Betätigungskraft-Verstärkerstufe aus, so dass eine derartige Verlagerung des Primärkolbens ausbleibt, so kann sich der Steuerkolben mit dem Primärkolben bei einer Bremspedalbetätigung mitbewegen. Ein derartiges Verhalten des Steuerkolbens kann beispielsweise mittels einer Anschlaghülse erreicht werden, welche an einem in dem Gehäuse vorgesehenen Anschlag im Normalbetrieb anliegt oder anlegbar ist und im Notbetriebsmodus von diesem Anschlag abhebbar ist.

Grundsätzlich gibt es verschiedene Möglichkeiten, eine Bremspedalbetätigung zu erfassen. So ist in einer Weiterbildung der Erfindung vorgesehen, dass die Pedalbetätigungs-Erfassungseinrichtung zur Erfassung des zurückgelegten Bremspedalwegs ausgebildet ist.

Hinsichtlich der Pedalsimulationsvorrichtung ist in einer Weiterbildung der Erfindung vorgesehen, dass diese eine Simulationsfederanordnung aufweist, welche bei einer Pedalbetätigung von dem Krafteingangsglied komprimierbar ist. Dem Fahrer wird durch eine derartige Simulationsfederanordnung eine ihm von herkömmlichen Systemen, bei welchen das Bremspedal unmittelbar mit der hydraulischen Bremsanlage gekoppelt ist, bekannte Widerstandrückmeldung vermittelt. Diese Rückmeldung eines Bremspedalwiderstands kann dadurch komfortabler gemacht werden, dass die Simulationsfederanordnung mit einer ersten Simulationsfeder und einer in Reihe geschalteten zweiten Simulationsfeder ausgeführt ist, wobei die erste Simulationsfeder gegenüber der zweiten Simulationsfeder eine kleinere Federhärte aufweist und wobei der ersten Simulationsfeder eine Anschlaghülse zugeordnet ist, welche nach Kompression der ersten Simulationsfeder um einen vorbestimmten Federweg auf Anschlag geht und eine weitere Komprimierung der ersten Simulationsfeder blockiert. Mit einer derartigen zweistufigen Simulationsfederanordnung kann dem Fahrer eine progressive Widerstandskennlinie vermittelt werden. Er verspürt mit zunehmendem Bremspedalweg auch einen überproportional zunehmenden Widerstand, was ihm zu einer besseren Dosierung einer Pedalbetätigungskraft verhilft. Dabei kann vorgesehen sein, dass die erste Simulationsfeder eine verhältnismäßig geringe Federhärte und einen gegenüber der zweiten Simulationsfeder kleinen Federweg aufweist. Eine Bremspedalbetätigung erfolgt demnach unter geringem Widerstand über einen verhältnismäßig kleinen Bremspedalweg bis zu dem Punkt, an welchem die der ersten Simulationsfeder zugeordnete Anschlaghülse auf Anschlag geht und eine weitere Komprimierung der ersten Simulationsfeder unterbunden wird. Erst wenn dieser Punkt erreicht wird, führt ein Fortsetzen der Bremspedalbetätigung mit erhöhter Pedalbetätigungskraft zu einer Komprimierung der zweiten Simulationsfeder, nun allerdings mit steilerer Kennlinie. Die der ersten Simulationsfeder zugeordnete Anschlaghülse hat den Vorteil, dass die erste Simulationsfeder bei einer kraftintensiven Bremspedalbetätigung nicht auf Block gesetzt und dabei zerstört wird.

In einer Weiterbildung des erfindungsgemäßen Bremskrafterzeugers ist vorgesehen, dass die Simulationsfederanordnung eine dritte Simulationsfeder aufweist, welche in Reihe zu der ersten und zweiten Simulationsfeder angeordnet ist und welche eine gegenüber der zweiten Simulationsfeder erhöhte Federhärte aufweist. Durch diese Maßnahme kann eine dreiphasige progressive Federkennlinie erreicht werden, wobei die dritte Simulationsfeder erst bei einer sehr kraftintensiven Bremspedalbetätigung komprimiert wird. Dabei ist es wiederum möglich, die dann vollständig komprimierte zweite Simulationsfeder mittels einer dieser zugeordneten Anschlaghülse gegen ein Auf-Block-Setzen zu schützen. Allgemein ist darauf hinzuweisen, dass die Simulationsfedern entweder Spiralfedern oder Tellerfederpakete umfassen können. Es ist auch möglich, die Simulationsfederanordnung mittels Kombinationen von Spiralfedern und Tellerfederpaketen zu realisieren, beispielsweise derart, dass man für die ersten beiden Simulationsfedern Spiralfedern unterschiedlicher Federhärte verwendet und für die dritte Simulationsfeder ein entsprechend federhartes Tellerfederpaket einsetzt.

Zusätzlich zu der Simulationsfederanordnung wird das Verhalten der Pedalsimulationsvorrichtung in einer Weiterbildung der Erfindung auch durch eine mit dem Krafteingangsglied gekoppelte Dämpfereinrichtung beeinflusst. Hierfür kann vorgesehen sein, dass die Dämpfereinrichtung ein Dämpfergehäuse und einen in dem Dämpfergehäuse fluiddicht geführten Dämpferkolben aufweist, wobei der Dämpferkolben mit dem Dämpfergehäuse beidseitig jeweils eine Dämpferkammer begrenzt und wobei die beiden Dämpferkammern über ein Fluidsystem fluidisch, insbesondere pneumatisch, miteinander gekoppelt sind.

Um die Dämpfungswirkung der Dämpfereinrichtung weiter zu verstärken, ist in einer Weiterbildung der Erfindung vorgesehen, dass das Fluidsystem eine Drosseleinrichtung zur Drosselung des Fluidstroms von der einen Dämpferkammer in die andere Dämpferkammer umfasst. Die Drosseleinrichtung kann gewünschtenfalls auch verstellbar sein und bei Bedarf an verschiedene Betriebssituation des Kraftfahrzeugs angepasst werden. Durch diese Drosseleinrichtung lässt sich zusätzlich oder alternativ zu der Simulationsfederanordnung ein gewünschtes Widerstandsverhalten des Bremspedals erreichen, insbesondere derart, wie es der Fahrer eines Kraftfahrzeugs von herkömmlichen hydraulischen Bremssystemen mit unmittelbarer Kopplung von Krafteingangsglied und Primärkolben gewohnt ist.

Eine Weiterbildung der Erfindung sieht vor, dass das Fluidsystem ein zur Drosseleinrichtung parallel geschaltetes Rückschlagventil umfasst, um den Fluidstrom lediglich in einer Strömungsrichtung zwischen den Dämpferkammern zu drosseln und in der entgegengesetzten Strömungsrichtung weitgehend ungehindert passieren zu lassen. Mit dieser Maßnahme lässt sich dem Betätigungsverhalten des Bremspedals eine Hysterese auferlegen. Mit anderen Worten lässt sich dann, wenn das Rückschlagventil bei einem Niederdrücken des Bremspedals blockiert und beim Freigeben des Bremspedals einen weitgehend ungedrosselten Fluidstrom zulässt, das Bremspedal nur mit verhältnismäßig großem Widerstand niederdrücken. Es bewegt sich jedoch bedingt durch das offene Rückschlagventil relativ schnell in seine Ausgangsstellung zurück und erlaubt eine neuerliche Betätigung ohne Rückstell-Verzögerung.

Wie vorstehend dargelegt spricht eine mit erfindungsgemäßem Bremskrafterzeuger ausgelegte Bremsanlage in einer Notbetriebssituation, d.h. im Falle des Versagens des Betätigungskraft-Verstärkerstufe, verhältnismäßig schnell an, da das Krafteingangsglied lediglich den Lüftspalt durchlaufen muss, bevor es mechanisch unmittelbar mit dem Kontaktfortsatz und damit mit dem Primärkolben gekoppelt ist. Obgleich der Lüftspalt verhältnismäßig klein gehalten ist, kann es in Einzelfällen vorteilhaft sein, das Anlegen des Krafteingangsglieds an den Kontaktfortsatz zu dämpfen und somit ein zu abruptes Ansprechen der Bremsanlage zu verhindern. Hierfür kann vorgesehen sein, dass in dem Lüftspalt zwischen dem Kontaktfortsatz und dem Krafteingangsglied eine Federvorrichtung, insbesondere ein Tellerfederpaket, angeordnet ist, welches im Falle des Versagens der Betätigungskraft-Verstärkerstufe das Anlegen des Krafteingangsglied an den Kontaktfortsatz dämpft. Demnach muss erst die Federvorrichtung, insbesondere das Tellerfederpaket, komprimiert werden, bis eine mechanische Kopplung von Krafteingangsglied und Kontaktfortsatz erfolgt. Die Federvorrichtung kann dabei parallel zu der Simulationsfederanordnung geschaltet werden.

Eine Weiterbildung der Erfindung sieht vor, dass sich der Kontaktfortsatz durch die Betätigungsdruckkammer hindurch erstreckt und dadurch das hydraulische Füllvolumen der Betätigungsdruckkammer reduziert. Der Kontaktfortsatz hat demnach neben der mehrfach erläuterten Wirkung der verhältnismäßig schnellen mechanischen Kopplung von Krafteingangsglied und Primärkolben im Notbetriebsmodus den zusätzlichen Effekt, dass er im Normalbetrieb bei voller Funktionsfähigkeit der Betätigungskraft-Verstärkerstufe die für einen Druckaufbau in der Betätigungsdruckkammer wirksame Fläche und damit das hydraulische Füllvolumen der Betätigungsdruckkammer reduziert. Dies führt zwar dazu, dass die Hydraulikdruckquelle einen erhöhten Hydraulikdruck liefern muss, um eine hinreichende Wirkung der Betätigungskraft-Verstärkerstufe sicherzustellen, allerdings ist zu einer Verlagerung des Primärkolbens ein kleineres Hydraulikfluidvolumen erforderlich, was letztendlich zu einem verbesserten Ansprechverhalten führt.

Hinsichtlich der konstruktiven Anordnung von Steuerkolben und Kontaktfortsatz ist in einer Weiterbildung der Erfindung vorgesehen, dass der Steuerkolben einen zentralen Durchbruch aufweist, durch welchen sich der Kontaktfortsatz dichtend geführt hindurch erstreckt. Demnach übernimmt der Steuerkolben zusätzlich zu seiner Funktion der Betätigungskraft-Verstärkerstufe auch noch Führungsfunktion bei der Führung des verhältnismäßig lang ausgebildeten Kontaktfortsatzes und damit bei der Führung des Primärkolbens.

Zur Steuerung der Betätigungskraft-Verstärkerstufe kann vorgesehen sein, dass die Hydraulikdruckquelle eine nach Maßgabe der Pedalbetätigung ansteuerbare Hydraulikventileinheit umfasst. Ferner kann vorgesehen sein, dass die Hydraulikdruckquelle eine Hydraulikpumpe, einen Druckbegrenzer und einen Druckspeicher umfasst.

Die hydraulische Betätigungskraft-Verstärkerstufe wird bei dieser Erfindungsvariante folglich durch eine Art Drifferenzdruck-Bremskraftverstärker ersetzt, bei welchem das Krafteingangsglied im Normalbetriebsfall vollständig von dem Primärkolben entkoppelt, im Notbetriebszustand, d.h. bei Ausfall der Betätigungskraft-Verstärkerstufe, allerdings verhältnismäßig schnell mit dem Primärkolben koppelbar ist.

In einer weiteren Erfindungsvariante umfasst der Bremskrafterzeuger einen in dem Gehäuse verlagerbaren Sekundärkolben, welcher mit dem Gehäuse eine Sekundärdruckkammer zur Erzeugung eines hydraulischen Bremsdrucks einschließt. Das Bereitstellen eines Sekundärkolbens zusätzlich zu dem Primärkolben erhöht die Zuverlässigkeit des hydraulischen Bremssystems, da dadurch mittels zweier Druckkammern hydraulischer Bremsdruck erzeugt wird, welcher dann auf Fahrzeugbremseinheiten an den jeweiligen abzubremsenden Rädern einwirkt.

Die Erfindung betrifft ferner eine hydraulische Kraftfahrzeugbremsanlage, welche mit einem Bremskrafterzeuger der vorstehend beschriebenen Art ausgeführt ist.

Im folgenden wird die Erfindung beispielhaft anhand der beiliegenden Figuren erläutert. Es stellen dar:
- Figur 1: eine schematische Ansicht einer hydraulischen Bremsanlage mit einem ersten Ausführungsbeispiel eines erfindungsgemäßen Bremskrafterzeugers;
- Figur 2: eine vergrößerte Darstellung des erfindungsgemäßen Bremskrafterzeugers gemäß Figur 1 und
- Figur 3: ein zweites Ausführungsbeispiel eines erfindungsgemäßen Bremskrafterzeugers.

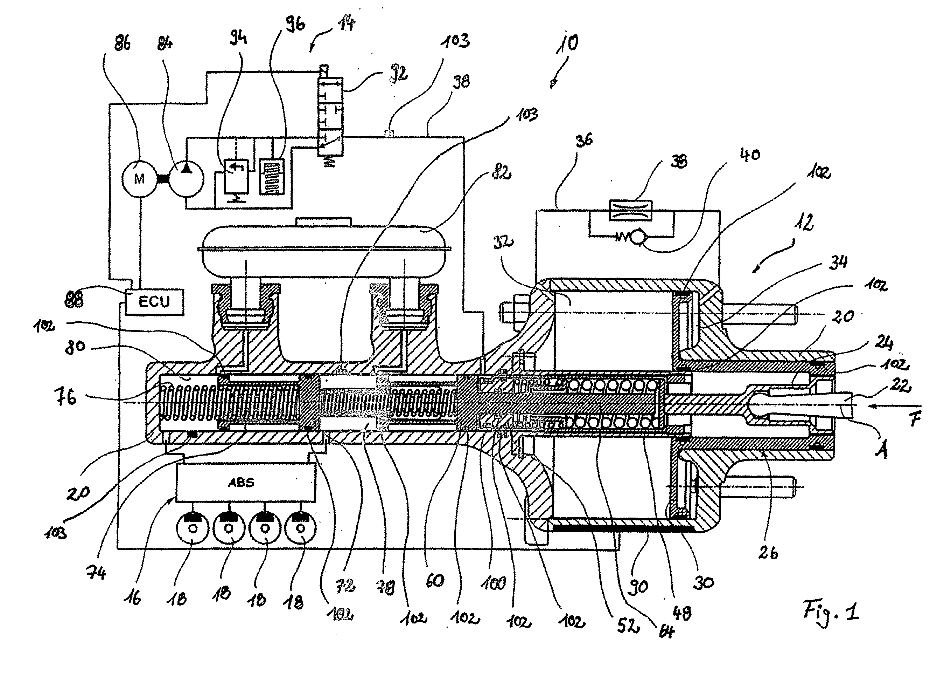

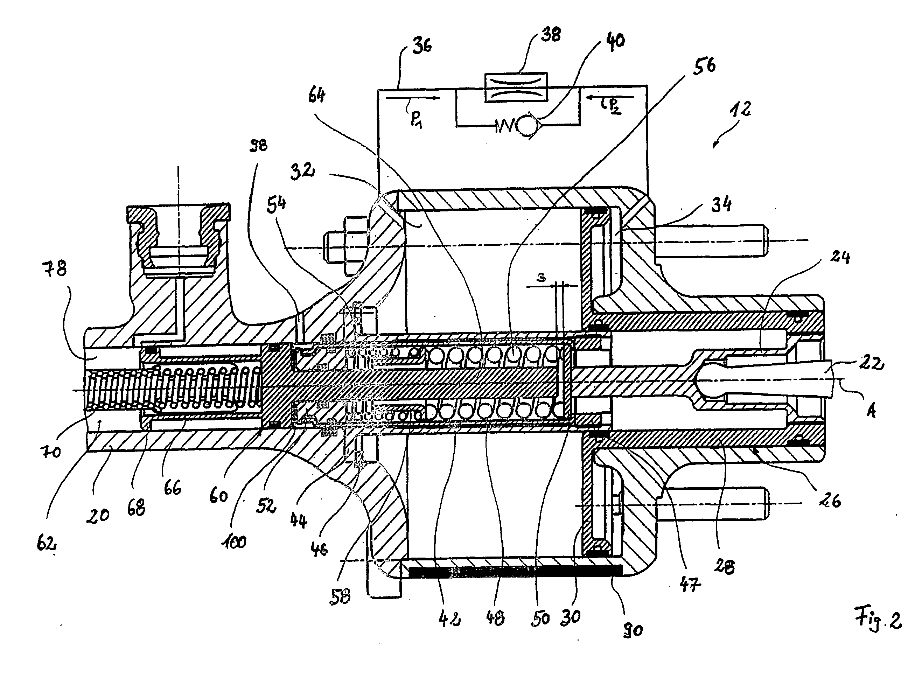

In Figur 1 ist eine erfindungsgemäße Kraftfahrzeugbremsanlage allgemein und mit 10 bezeichnet. Diese umfasst einen Bremskrafterzeuger 12, welcher separat von den übrigen Komponenten vergrößert in Figur 2 gezeigt ist.

Die Kraftfahrzeugbremsanlage 10 umfasst neben dem Bremskrafterzeuger 12 eine Hydraulikdruckquelle 14, sowie eine hydraulische Bremsanlage 16, mittels welcher an jedem anzubremsenden Rad des Kraftfahrzeugs angeordnete Bremseinheiten 18 in an sich bekannter Weise angesteuert werden.

Der Bremskrafterzeuger umfasst ein Gehäuse 20, in welches ein mit einem in Figur 1 und 2 nicht gezeigten Fahrzeugbremspedal gekoppeltes Krafteingangsglied 22 hineinragt. Das Krafteingangsglied 22 ist in einem Stößel 24 aufgenommen, der über eine Gewindeverbindung mit einem in dem Gehäuse 20 geführten Dämpferkolben 26 zu einer gemeinsamen Bewegung gekoppelt ist. Der Dämpferkolben 26 umfasst einen in dem Gehäuse 20 geführten Kolbenschaft 28 und eine mit dem Kolbenschaft 28 starr verbundene Kolbenscheibe 30. Die Kolbenscheibe 30 ist in einem bauchig ausgebildeten zylindrischen Bereich des Gehäuses 20 verlagerbar geführt und schließt mit dem Gehäuse 20 zusammen beidseitig jeweils eine Dämpferkammer 32 und 34 ein. Die beiden Dämpferkammern 32 und 34 sind über ein pneumatisches Fluidsystem 36 fluidisch miteinander verbunden, wobei das Fluidsystem 36 eine Drosseleinrichtung 38 und ein zu der Drosseleinrichtung 38 parallel geschaltetes Rückschlagventil 40 aufweist.

Der Stößel 24 erstreckt sich in eine hohlzylindrische Führungsbuchse 42, welche an ihrem von dem Stößel 24 entfernten Ende mit einem Flansch 44 und einem Sicherungsring 46 in dem Gehäuse 20 festgelegt ist. Die Führungsbuchse 42 weist an ihrem von dem Flansch 44 entfernten Ende ein Innengewinde auf, in welches ein Außengewindering 47 eingeschraubt ist. Der Außengewindering 47 wirkt als Anschlag für eine verschiebbar in der Führungsbuchse 42 und in dem Gehäuse 20 aufgenommene Verbindungshülse 48. Die Verbindungshülse 48 führt in Richtung der Achse A eine Druckplatte 50, welche in Anlage mit dem Stößel 24 steht. An ihrem entgegengesetzten Ende ist die Verbindungshülse 48 fest mit einem ringförmig ausgebildeten Steuerkolben 52 verbunden. Die Verbindungshülse 48 nimmt zwischen dem Steuerkolben 52 und der Druckplatte 50 ein erste Simulationsfeder 54 und eine mit dieser in Reihe geschaltete zweite Simulationsfeder 56 auf. Die beiden Simulationsfedern 54 und 56 sind durch den Flansch einer Anschlaghülse 58 voneinander getrennt und liegen beidseitig an diesem an. Der Schaft der Anschlaghülse 58 erstreckt sich in axialer Richtung durch die Simulationsfeder 54 zu dem Steuerkolben 52 hin.

Benachbart zu dem Steuerkolben 52 ist ein Primärkolben 60 vorgesehen, welcher ebenso wie die Verbindungshülse 48 axial in einer Bohrung 62 in dem Gehäuse 20 geführt ist. Ausgehend von dem Primärkolben 60 erstreckt sich starr mit diesem verbunden ein Kontaktfortsatz 64. Der Kontaktfortsatz 64 erstreckt bis kurz vor die Druckplatte 50, so dass sich zwischen der Druckplatte 50 und dem freien Ende des Kontaktfortsatzes 64 ein Lüftspalt s einstellt. Der Kontaktfortsatz 64 erstreckt sich durch eine zentrale Bohrung innerhalb des Steuerkolbens 52 hindurch.

Ferner ist an dem Primärkolben 60 ein hohlzylindrischer Aufnahmeabschnitt 66 vorgesehen, der an seinem freien Ende einen in der Axialbohrung 62 geführten Flansch 68 aufweist. In dem Aufnahmeabschnitt 66 ist eine erste Rückstellfeder 70 aufgenommen. Diese stützt sich einenends an dem Primärkolben 60 ab. Anderenends stützt sich die Rückstellfeder 70 an einem Sekundärkolben 72 ab. Der Sekundärkolben 72 umfasst ferner einen in axialer Richtung verlaufenden hohlzylindrischen Aufnahmeabschnitt 74, welcher ebenfalls eine Rückstellfeder 76 aufnimmt.

Die Rückstellfeder 76 liegt einenends an dem Sekundärkolben 72 an und anderenends an der Stirnfläche des Gehäuses 20. Der Primärkolben 60 schließt mit dem Sekundärkolben 72 eine Primärdruckkammer 78 ein. Der Sekundärkolben 72 schließt mit dem Gehäuse 20 eine Sekundärdruckkammer 80 ein. Die Primärdruckkammer 78 und die Sekundärdruckkammer 80 sind in herkömmlicher Weise mit einem Hydraulikfluidtank 82 sowie mit der hydraulischen Bremsanlage 16 gekoppelt.

Wendet man sich der Hydraulikdruckquelle 14 zu, so ist Folgendes anzumerken: Die Hydraulikdruckquelle 14 umfasst eine Pumpe 84, welche über einen Motor 86 angetrieben wird. Der Motor 86 wird über eine elektronische Steuereinheit 88 gesteuert. Die Steuerung erfolgt nach Maßgabe der Stellung der Kolbenscheibe 30 innerhalb des Gehäuses 20. Die Stellung der Kolbenscheibe 30 innerhalb des Gehäuses 20 wird mittels eines Wegaufnehmers 90 erfasst, der an der Außenseite des Gehäuses 20 in dessen bauchigem Bereich angebracht ist. Der Wegaufnehmer 90 funktioniert beispielsweise magnetisch. Zusätzlich umfasst die Hydraulikdruckquelle 14 ein Druckbegrenzungsventil 94, welches im Falle eines zu hohen von der Pumpe 84 erzeugten Drucks diese fluidisch kurz schließt. Ferner umfasst die Hydraulikdruckquelle 14 einen Druckspeicher 96. Die Hydraulikdruckquelle 14 ist über eine Leitung 98 mit einer Betätigungsdruckkammer 100 fluidisch verbunden. Es ist darauf hinzuweisen, dass das Steuerventil 92 ebenfalls über die elektronische Steuereinheit 88 gesteuert wird.

Zur fluidisch dichtenden Führung weisen die relativ zueinander und relativ zu dem Gehäuse 20 bewegten Komponenten jeweils Dichtungsringe 102 auf. Ferner sind Drucksensoren 103 an verschiedenen Stellen des erfindungsgemäßen Systems vorgesehen, beispielsweise in der Leitung 98, der Primärdruckkammer 78 und der Sekundärdruckkammer 80. Mit diesen Drucksensoren 103 lässt sich das System überwachen und erforderlichenfalls ein Notbetriebsmodus einleiten, wenn beispielsweise die Hydraulikdruckquelle 14 ausgefallen ist.

Die Kraftfahrzeugbremsanlage 10 mit dem erfindungsgemäßen Bremskrafterzeuger 12 funktioniert wie folgt. Im Normalbetrieb wird durch Betätigung eines nicht gezeigten Bremspedals auf das Krafteingangsglied 22 eine Pedalbetätigungskraft F ausgeübt. Diese drückt das Krafteingangsglied 22 in Richtung der Achse A in das Gehäuse 20 hinein und verschiebt sogleich den Stößel 24 und mit diesem zusammen den Dämpferkolben 26 innerhalb des Gehäuses 20. Eine Bewegung der Kolbenscheibe 30 wird über den Wegaufnehmer 90 erfasst und an die elektronische Steuereinheit 88 gemeldet. Diese aktiviert entsprechend den Motor 86 und damit die Pumpe 84, welche zugleich einen Hydraulikdruck aufbaut. Dieser Hydraulikdruck wird in dem Druckspeicher 96 gespeichert. In der Folge schaltet das Steuerventil 92 von der in Figur 1 gezeigten unteren Ventilstellung über die mittlere Ventilstellung zu der oberen Ventilstellung, so dass sich der in dem Druckspeicher 96 gespeicherte Hydraulikdruck in der Leitung 98 aufbaut und von dieser in die Betätigungsdruckkammer 100 eingeleitet wird. Dadurch baut sich in der Betätigungsdruckkammer 100 ein korrespondierender Hydraulikdruck auf. Dieser wirkt zum einen auf den Steuerkolben 52 und zum anderen auf den Primärkolben 60. Der Steuerkolben 52 stützt sich allerdings über die Verbindungshülse 48 an dem Anschlag 47 ab, so dass eine Bewegung des Steuerkolbens 52 in axialer Richtung in Figur 1 nach rechts nicht möglich ist. Allein der Primärkolben 60 kann sich unter dem in der Betätigungsdruckkammer 100 aufgebauten Betätigungsdruck in axialer Richtung in den Figuren 1 und 2 jeweils nach links verlagern und baut damit in der Primärdruckkammer 78 sowie in der Sekundärkammer 80 einen Hydraulikdruck auf, der dann an die hydraulische Bremsanlage 16 weitergegeben wird. Durch die Bewegung des Primärkolbens 60 wird auch der Kontaktfortsatz 64 mit diesem Primärkolben 60 mitbewegt, d.h. der Kontaktfortsatz 64 bewegt sich ebenfalls in Figuren 1 und 2 nach links. Die Bewegung des Kontaktfortsatzes 64 zusammen mit dem Primärkolben 60 erfolgt mit einem Hub in axialer Richtung, welcher mindestens so groß ist wie die durch die Betätigung des Bremspedals bewirkte Verlagerung des Krafteingangsglieds 22 und des Stößels 24. Dies bedeutet, dass sich die mit dem Stößel 24 mitbewegende Druckplatte 50 - sieht man von einer ersten Reaktionszeit aufgrund der Trägheit des Systems einmal ab - nicht dem Kontaktfortsatz 64 nähert und im Normalbetrieb, d.h. dann, wenn alle Komponenten des Systems ordnungsgemäß funktionieren, auch nicht mit diesem in Anlage kommt. Vielmehr bewegt sich der Kontaktfortsatz 64 aufgrund der durch den Betätigungsdruck hervorgerufenen Bewegung des Primärkolbens 60 in größerem Ausmaß in axialer Richtung, so dass sich der in Figur 2 gezeigte Lüftspalt s im Normalbetrieb bei einer Betätigung des Bremspedals eher vergrößert, jedenfalls aber nicht so verkleinert, dass ein bleibender Kontakt zwischen dem Kontaktfortsatz 64 und der Druckplatte 50 zustande kommt.

Es ist darauf hinzuweisen, dass die von den Komponenten Krafteingangsglied 22, Stößel 24 und Drosselkolben 26 vollzogene Bewegung verschiedenen Dämpfungen unterliegt. Zum einen werden durch die Druckplatte 50 die Simulationsfedern 54 und 56 nacheinander komprimiert. Dies erfolgt derart, dass zunächst die Simulationsfeder 54 soweit komprimiert wird, bis sich die Anschlaghülse 58 an den Steuerkolben 54 anlegt. Daraufhin ist keine weitere Komprimierung der weichen Simulationsfeder 54 mehr möglich. Wird aufgrund einer kraftintensiven Pedalbetätigung die Druckplatte 50 weiter verlagert, so wird in der Folge die härtere Simulationsfeder 56 komprimiert. Es sei jedoch nochmals darauf hingewiesen, dass selbst bei einer weitreichenden Komprimierung der Simulationsfeder 56 bei ordnungsgemäßem Betrieb der Druckquelle 14 kein bleibender Kontakt zwischen dem Kontaktfortsatz 64 und der Druckplatte 50 hergestellt wird. Durch die nacheinander folgende Komprimierung der beiden Simulationsfedern 54 und 56 erfährt ein Fahrer des Kraftfahrzeugs am Bremspedal einen progressiven Verlauf des Widerstands. Das Bremspedal lässt sich zunächst mit verhältnismäßig geringem Widerstand niederdrücken, nämlich so lange, wie die Simulationsfeder 54 komprimierbar ist. Sobald die Anschlaghülse 58 an dem Steuerkolben 52 anliegt, wird allerdings die Widerstandskennlinie steiler und der Fahrer muss fortan eine höhere Kraft aufbringen, um das Bremspedal weiter niederzudrücken.

Neben dem durch die Simulationsfedern 54 und 56 erzeugten Widerstand bewirkt die Verschiebung der Kolbenscheibe 30 innerhalb des Gehäuses 20 eine Veränderung der Volumina der Dämpferkammern 32 und 34. Wird nämlich bei einer Pedalbetätigung die Kolbenscheibe 30 innerhalb des Gehäuses 20 in den Figuren 1 und 2 gezeigten Ausführungsbeispiel axial nach links verschoben, so wird die Dämpferkammer 32 verkleinert und die Dämpferkammer 34 vergrößert. Dies führt dazu, dass sich in der Dämpferkammer 32 ein Überdruck ausbildet, in der Dämpferkammer 34 ein Unterdruck. Diese Druckdifferenz wird über das Fluidsystem 36 derart ausgeglichen, dass aufgrund des in der Dämpferkammer 34 zunehmenden Unterdrucks entsprechend Pfeil P₁ Luft über das Fluidsystem 36 aus der Dämpferkammer 32 gesaugt wird. Bei einer derartigen Luftströmung entsprechend P₁ schließt das Rückschlagventil 40 selbsttätig, so dass die Luft durch die Drosseleinrichtung 38 strömen muss und die Strömung dabei gedrosselt wird. Durch diese Drosselwirkung wird eine Verlagerung der Kolbenscheibe 30 innerhalb des Gehäuses 20 gebremst, so dass sich der Widerstand an dem Bremspedal zusätzlich zu dem von den Federn 54 und 56 aufgebrachten Widerstand weiter erhöht.

Wird das Pedal freigegeben, so wirken die in dem System vorhandenen Federn rückstellend auf das Bremspedal, so dass sich die Kolbenscheibe 30 in die in den Figuren 1 und 2 gezeigte Ausgangsstellung zurückbewegt. Dadurch wird entsprechend Pfeil P₂ Luft aus der Dämpferkammer 34 heraus durch das Fluidsystem 36 in die Dämpferkammer 32 hinein gepresst. Eine derartige Luftströmung öffnet das Rückschlagventil 40 selbsttätig, so dass die Luft weitgehend ungehindert durch das Fluidsystem 36 in die Dämpferkammer 32 einströmen kann. Mit anderen Worten wirkt das Fluidsystem 36 bei einer derartigen Rückstellbewegung nicht dämpfend. Insgesamt kann dem Bremspedalverhalten durch das Fluidsystem 36 in Kombination mit den Dämpferkammern 32 und 34 sowie der Kolbenscheibe 30 eine Hysterese auferlegt werden, durch welche eine gedämpfte Auslenkung und eine ungedämpfte Rückstellbewegung des Bremspedals möglich ist.

Fällt nun beispielsweise durch einen partiellen Stromausfall innerhalb des Kraftfahrzeugs oder durch einen Defekt wenigstens einer der Komponenten die Hydraulikdruckquelle 14 aus, so kann keine Bremskrafterzeugung mehr mittels eines in der Betätigungskammer 100 aufgebauten Hydraulikdrucks erzielt werden. Dennoch ist eine sichere Funktion des Bremssystems 10 zu gewährleisten. Diese erfolgt erfindungsgemäß dadurch, dass im Falle einer Betätigung des Bremspedals mit der Kraft F und einer Auslenkung des Krafteingangsglieds 22 zusammen mit dem Stößel 24 die Druckscheibe 50 in Figuren 1 und 2 nach links verlagert wird. Aufgrund der nicht funktionierenden Hydraulikdruckquelle 14 kommt es, trotz einer Auslenkung der Kolbenscheibe 30 aus der in Figuren 1 und 2 gezeigten Stellung heraus, nicht zu einer Verlagerung des Primärkolbens 60 durch einen in der Betätigungsdruckkammer 100 aufgebauten Betätigungsdruck. Daher bewegt sich der Primärkolben 60 zunächst allein durch die Wirkung der Simulationsfedern 54 und 56 in axialer Richtung. Bei dieser Bewegung des Primärkolbens 60 müssen Bewegungswiderstände und von der Primärdruckkammer 78, beispielsweise von der Rückstellfeder 70 herrührende Gegenkräfte überwunden werden. Sobald diese Gegenkräfte zu einer Komprimierung der ersten Simulationsfeder 54 führen, nähert sich der Kontaktfortsatz 64 der Druckplatte 50 und legt sich schließlich an diesen an. Dann bewegt sich der Primärkolben 60 unter Wirkung der Kraft F zusammen mit dem Steuerkolben 52, der daran befestigten Verbindungshülse 48 sowie den in dieser gehaltenen Simulationsfedern 54 und 56 in axialer Richtung in Figur 1 und 2 nach links. In der Folge wird in der Primärdruckkammer 78 und der Sekundärdruckkammer 80 ein Bremsdruck erzeugt, der an die Bremsanlage 16 weitergegeben wird. Figuren 1 und 2 zeigen, dass eine unmittelbare mechanische Kopplung von Druckplatte 50, Krafteingangsglied 22 sowie Kontaktfortsatz 64 und damit Primärkolben 60 verhältnismäßig schnell erfolgt, nämlich nach Überbrückung des Lüftspalts s durch die Druckplatte 50. Demnach spricht im Falle eines Versagens der Druckquelle 14, d.h. in einer Notbetriebssituation, die Bremsanlage relativ schnell an, da lediglich der Lüftspalt s überbrückt werden muss, während dessen Durchlaufen kaum Bremswirkung erzielt wird.

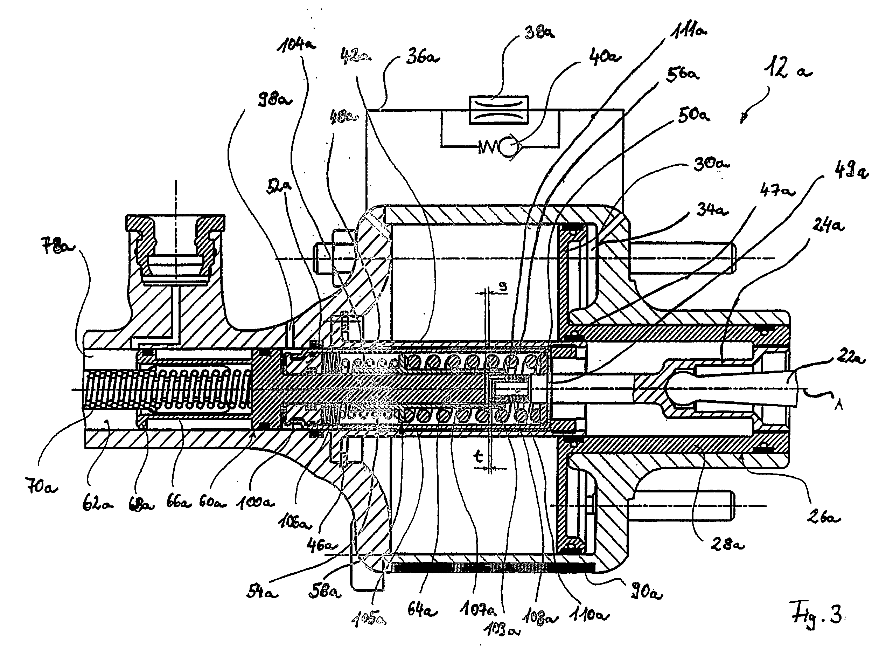

Figur 3 zeigt eine Ansicht ähnlich Figur 2 eines zweiten Ausführungsbeispiels des erfindungsgemäßen Bremskrafterzeugers. Zur Vermeidung von Widerholungen sollen lediglich die Unterschiede zu dem ersten Ausführungsbeispiel gemäß Figuren 1 und 2 erläutert werden. Für gleichartige oder gleichwirkende Komponenten werden dieselben Bezugszeichen wie bei der Beschreibung von Figuren 1 und 2 verwendet, jedoch mit dem Buchstaben "a" nachgestellt.

Das zweite Ausführungsbeispiel gemäß Figur 3 unterscheidet sich vom ersten Ausführungsbeispiel gemäß Figuren 1 und 2 dadurch, dass die erste Simulationsfeder 54a nicht unmittelbar an dem Steuerkolben 52a, sondern an einer Tellerfederanordnung 106a anliegt, welche vier Tellerfedern umfasst. Die Tellerfedern der Tellerfederanordnung 106a liegen mit ihrem von der Simulationsfeder 54a entfernten Ende an dem Steuerkolben 52a an. Sie sind derart ausgebildet, dass sie bei einer Komprimierung der ersten Simulationsfeder 54a mit dem diesen zugewandten Abschnitt 104a der Anschlaghülse 58a in Kontakt kommen können und von diesem dann ohne weitere Komprimierung der ersten Simulationsfeder 54a komprimiert werden können. Die Anschlaghülse 58a weist einen Bund 105a auf, an welchem das von den Tellerfedern abgewandte Ende der ersten Simulationsfeder 54a anliegt. Von dem Bund 105a aus erstreckt sich ein rohrförmiger Bereich 107a. Auf diesen Bereich 107a ist die zweite Simulationsfeder 56a aufgeschoben. Bei einer weiteren Verschiebung des Krafteingangsglieds 22a in Richtung der Achse A nach links kommt es - nach dem die erste Simulationsfeder 54a bereits gemäß vorstehender Erläuterung bis zu einer gegenseitigen Anlage des Bereichs 104a an dem Tellerfederpaket 106a komprimiert wurde - zu einer weiteren Komprimierung der Federanordnung, nämlich zu einer Komprimierung der zweiten Simulationsfeder 56a. Diese kann soweit komprimiert werden, bis das freie Ende des rohrförmigen Abschnitts 107a der Anschlaghülse 58a an der Druckplatte 50a anliegt. Tritt dieser Zustand ein, so lässt sich auch die zweite Simulationsfeder 56a nicht weiter komprimieren und eine weitere Axialverschiebung des Krafteingangsglieds 22a führt schließlich unter Vermittlung der Anschlaghülse 58a zu einer Komprimierung des Tellerfederanordnung 106a. Es sei angemerkt, dass eine Kraftübertragung zwischen dem Stößel 24a und der Druckfeder 50a über einen Sicherungsring 49a erfolgt.

Durch diese konstruktive Maßnahme kann erreicht werden, dass die in der Verbindungshülse 48a angeordnete Simulationsfederanordnung eine progressive Federkennlinie mit drei verschiedenen Steigungen aufweist, nämlich mit einer verhältnismäßig flachen Eingangssteigung bedingt durch die Federkennlinie der ersten Simulationsfeder 54a, einem steileren Kennlinienabschnitt bedingt durch die zweite Simulationsfeder 56a, welche dann komprimiert wird, wenn die Anschlaghülse 58a an der Tellederfederanordnung 106a anliegt, und schließlich einem noch steileren Kennlinienabschnitt bedingt durch die steife Tellerfederanordnung 106a, deren Federhärte gegenüber der Federhärte der zweiten Simulationsfeder 56a weiter gesteigert ist. Dadurch kann erreicht werden, dass selbst bei kraftintensiver Betätigung des Bremspedals durch einen Fahrer dieser eine zunehmenden Widerstand gegen eine Bremspedalbetätigung spürt.

Das zweite Ausführungsbeispiel gemäß Fig.3 zeigt darüber hinaus eine gegenüber Fig. 2 veränderte Ankopplung des Stößels 24a an den Kontaktfortsatz 64a. Der Stößel 24a weist an seinem in Fig.3 linken Ende einen Zapfen 108a auf, auf welchen ein Tellerfederpaket 110a aufgesetzt ist. An seinem freien Ende ist der Stößel mit einer an diesem fixierten Sperrbuchse 109a versehen diese beschränkt die axiale Verschiebbarkeit einer auf dem Zapfen 108a verschiebbar gelagerten Anschlagbuchse 111a. Die Anschlagbuchse 111a ragt in axialer Richtung über die Sperrbuchse 109a hinaus.

Die Anordnung im Bereich des freien Endes des Stößels 24a funktioniert wie folgt. Im Normalbetrieb wird die Anschlagbuchse 111a mit ihrem linken Ende, wie vorstehend mehrfach beschrieben, in Abstand zu dem Kontaktfortsatz 64a gehalten, nämlich derart, dass der Lüftspalt s aufrecht erhalten wird. Dies geschieht durch entsprechenden Druckaufbau in der Betätigungskammer 100a. Ist ein derartiger Druckaufbau allerdings nicht möglich, beispielsweise durch elektronisch bedingten oder leckagebedingten Ausfall der Hydraulikdruckquelle 14 gemäß Fig.1, so führt eine Verschiebung des Krafteingangsglieds 22a in Fig.3 nach links nicht zu einem entsprechenden Druckaufbau in der Betätigungskammer 100a und einer daraus resultierenden Verschiebung des Primärkolbens 60a. Vielmehr bewegt sich der Primärkolben 60a nur unter der Wirkung der Simulationsfedern 54a, 56a, 106a aus seiner Position gemäß Fig.3, während sich das Krafteingangsglied 22a in Fig.3 nach links bewegt. Aufgrund von zunehmenden Gegenkräften wird die erste Simulationsfeder 54a komprimiert, wobei sich die Anschlagbuchse 111a dem Kontaktfortsatz 64a nähert und sich an diesen anlegt. Sobald dies erfolgt und das Krafteingangsglied 22a weiter in Fig.3 nach links geschoben wird, kommt es zu einer Relativbewegung zwischen der Anschlaghülse 111a und dem Zapfen 108a zusammen mit dessen Sperrhülse 109a. Bei dieser Relativbewegung wird die Tellerfederanordnung 110a komprimiert. Der maximale Weg einer derartigen Komprimierung ist in Fig.3 mit dem Buchstaben t bezeichnet. Sobald sich nämlich die Sperrhülse 109a an den Kontaktfortsatz 64a anlegt wird eine Axialbewegung des Krafteingangsglieds 22a unmittelbar auf den Kontaktfortsatz 64a übertragen, ohne dass eine weitere Komprimierung des Tellerfederpakets 110a stattfinden kann.

Durch diese Maßnahme im Bereich des freien Endes des Stößels 24a spürt der Fahrer des Fahrzeugs in einer Notbetriebssituation keinen abrupten Anstieg des Widerstands.

## Patentansprüche

1. Bremskrafterzeuger (12; 12a) für eine hydraulische Kraftfahrzeugbremsanlage (10) mit
einem Krafteingangsglied (22; 22a), das mit einem Bremspedal (126b) gekoppelt ist, einem Gehäuse (20; 20a) und einem in dem Gehäuse (20; 20a) verlagerbaren Primärkolben (60; 60a), wobei der Primärkolben (60; 60a) mit dem Gehäuse eine Primärdruckkammer (78; 78a) zur Erzeugung eines hydraulischen Bremsdrucks einschließt,
einer mit dem Krafteingangsglied (22; 22a) gekoppelten Pedalsimulationseinrichtung, einer Pedalbetätigungs-Erfassungseinrichtung (90; 90a) zur Erfassung der Pedalbetätigung und
einer Betätigungskraft-Verstärkerstufe zum Ausüben einer Betätigungskraft auf den Primärkolben (60; 60a),
wobei im Normalbetrieb das Krafteingangsglied (22; 22a;) von dem Primärkolben (60; 60a) mechanisch entkoppelt ist und die Betätigungskraft-Verstärkerstufe nach Maßgabe der erfassten Pedalbetätigung eine Betätigungskraft auf den Primärkolben (60; 60a) ausübt und
wobei im Falle des Versagens der Betätigungskraft-Verstärkerstufe das Krafteingangsglied (22; 22a) mit dem Primärkolben (60; 60a) kraftübertragend koppelbar ist,
wobei sich ausgehend vom Primärkolben (60; 60a) ein Kontaktfortsatz (64; 64a) zu dem Krafteingangsglied (22; 22a) hin erstreckt,
wobei im Normalbetrieb der Kontaktfortsatz (64; 64a) mit Lüftspalt (s) in Abstand zu dem Krafteingangsglied (22; 22a) gehalten ist und im Falle des Versagens der Betätigungskraft-Verstärkerstufe das Krafteingangsglied (22; 22a) sich nach Durchlaufen des Lüftspalts (s) kraftübertragend an den Kontaktfortsatz (64; 64a) anlegt und
wobei die Betätigungskraft-Verstärkerstufe die Betätigungskraft hydraulisch erzeugt,
**dadurch gekennzeichnet, dass** die Betätigungskraft-Verstärkerstufe einen in dem Gehäuse (20; 20a) geführten Steuerkolben (52; 52a) aufweist, welcher zusammen mit dem Primärkolben (60; 60a) eine mit einer Hydraulikdruckquelle (14) gekoppelte oder koppelbare Betätigungsdruckkammer (100; 100a) begrenzt, wobei im Normalbetrieb durch den in der Betätigungsdruckkammer (100; 100a) anliegenden Betätigungsdruck der Primärdruckkolben (60; 60a) zur Erzeugung des Bremsdrucks in dem Gehäuse (20; 20a) verlagerbar ist und der Steuerkolben (52; 52a) ortsfest gehalten wird, und wobei sich im Falle des Versagens der Betätigungskraft-Verstärkerstufe der Steuerkolben (52; 52a) mit dem Primärdruckkolben (60; 60a) mit bewegt.

2. Bremskrafterzeuger (12; 12a) nach Anspruch 1,
**dadurch gekennzeichnet, dass** die Pedalbetätigungs-Erfassungseinrichtung (90; 90a; 90b; 90c) zur Erfassung des zurückgelegten Bremspedalwegs ausgebildet ist.

3. Bremskrafterzeuger (12; 12a) nach einem der vorangehenden Ansprüche,
**dadurch gekennzeichnet, dass** die Pedalsimulationsvorrichtung eine Simulationsfederanordnung aufweist, welche bei einer Pedalbetätigung von dem Krafteingangsglied (22; 22a) komprimierbar ist.

4. Bremskrafterzeuger (12; 12a) nach Anspruch 3,
**dadurch gekennzeichnet, dass** die Simulationsfederanordnung mit einer ersten Simulationsfeder (54; 54a) und einer in Reihe geschalteten zweiten Simulationsfeder (56; 56a) ausgeführt ist, wobei die erste Simulationsfeder (54; 54a) gegenüber der zweiten Simulationsfeder (56; 56a) eine kleinere Federhärte aufweist und wobei der ersten Simulationsfeder (54; 54a) eine Anschlaghülse (58; 58a) zugeordnet ist, welche nach Kompression der ersten Simulationsfeder (54; 54a) um einen vorbestimmten Federweg auf Anschlag geht und eine weitere Komprimierung der ersten Simulationsfeder (54; 54a) blockiert.

5. Bremskrafterzeuger (12a) nach Anspruch 4,
**dadurch gekennzeichnet, dass** die Simulationsfederanordnung eine dritte Simulationsfeder (106a) aufweist, welche in Reihe zu der ersten (54a) und zweiten Simulationsfeder (56a) angeordnet ist und welche eine gegenüber der zweiten Simulationsfeder (56a) erhöhte Federhärte aufweist.

6. Bremskrafterzeuger (12; 12a) nach einem der vorangehenden Ansprüche,
**dadurch gekennzeichnet, dass** die Pedalsimulationsvorrichtung eine mit dem Krafteingangsglied (22; 22a) gekoppelte Dämpfereinrichtung aufweist.

7. Bremskrafterzeuger (12; 12a) nach Anspruch 6,
**dadurch gekennzeichnet, dass** die Dämpfereinrichtung ein Dämpfergehäuse (20; 20a) und einen in dem Dämpfergehäuse (20; 20a) fluiddicht geführten Dämpferkolben (26; 26a) aufweist, wobei der Dämpferkolben (26; 26a) mit dem Dämpfergehäuse (20; 20a) beidseitig jeweils eine Dämpferkammer (32, 34; 32a, 34a) begrenzt und wobei die beiden Dämpferkammern (32, 34; 32a, 34a) über ein Fluidsystem (36; 36a) fluidisch, insbesondere pneumatisch, miteinander gekoppelt sind.

8. Bremskrafterzeuger (12; 12a) nach Anspruch 7,
**dadurch gekennzeichnet, dass** das Fluidsystem (36; 36a) eine Drosseleinrichtung (38; 38a) zur Drosselung des Fluidstroms von der einen Dämpferkammer (32; 32a) in die andere Dämpferkammer (34; 34a) umfasst.

9. Bremskrafterzeuger (12; 12a) nach Anspruch 8,
**dadurch gekennzeichnet, dass** das Fluidsystem (36; 36a) ein zur Drosseleinrichtung (38; 38a) parallel geschaltetes Rückschlagventil (40; 40a) umfasst, um den Fluidstrom lediglich in einer Strömungsrichtung zwischen den Dämpferkammern (32, 34; 32a, 34a) zu drosseln und in der entgegengesetzten Strömungsrichtung weitgehend ungehindert passieren zu lassen.

10. Bremskrafterzeuger (12a) nach einem der vorangehenden Ansprüche,
**dadurch gekennzeichnet, dass** in dem Lüftspalt (s) zwischen dem Kontaktfortsatz (64a) und dem Krafteingangsglied (22a) eine Federvorrichtung (110a), insbesondere ein Tellerfederpaket (110a), angeordnet ist, welches im Falle des Versagens der Betätigungskraft-Verstärkerstufe das Anlegen des Krafteingangsglied (22a) an den Kontaktfortsatz (64a) dämpft.

11. Bremskrafterzeuger (12; 12a) nach einem der vorangehenden Ansprüche,
**dadurch gekennzeichnet, dass** der Steuerkolben (52; 52a) über eine Anschlaghülse (58; 58a) an einem in dem Gehäuse (20; 20a) vorgesehenen Anschlag (47; 47a) anliegt.

12. Bremskrafterzeuger (12; 12a) nach einem der vorangehenden Ansprüche,
**dadurch gekennzeichnet, dass** sich der Kontaktfortsatz (64; 64a) durch die Betätigungsdruckkammer (100; 100a) hindurch erstreckt und **dadurch** das hydraulische Füllvolumen der Betätigungsdruckkammer (100; 100a) reduziert.

13. Bremskrafterzeuger (12; 12a) nach einem der einem der vorangehenden Ansprüche,
**dadurch gekennzeichnet, dass** der Steuerkolben (52; 52a) einen zentralen Durchbruch aufweist, durch welchen sich der Kontaktfortsatz (64; 64a) dichtend geführt hindurch erstreckt.

14. Bremskrafterzeuger (12; 12a) nach einem der einem der vorangehenden Ansprüche,
**dadurch gekennzeichnet, dass** die Hydraulikdruckquelle (14) eine nach Maßgabe der Pedalbetätigung ansteuerbare Hydraulikventileinheit (92) umfasst.

15. Bremskrafterzeuger (12) nach einem der einem der vorangehenden Ansprüche,
**dadurch gekennzeichnet, dass** die Hydraulikdruckquelle (14) eine Hydraulikpumpe (84), einen Druckbegrenzer (94) und einen Druckspeicher (96) umfasst.

16. Bremskrafterzeuger (12; 12a) nach einem der vorangehenden Ansprüche, **gekennzeichnet durch** einen in dem Gehäuse (20; 20a) verlagerbaren Sekundärkolben (72; 72a), welcher mit dem Gehäuse (20; 20a) eine Sekundärdruckkammer (80; 80a) zur Erzeugung eines hydraulischen Bremsdrucks einschließt.

17. Hydraulische Kraftfahrzeugbremsanlage (10),
**gekennzeichnet durch** einen Bremskrafterzeuger (12; 12a) nach einem der vorangehenden Ansprüche.

## Claims

1. Braking force generator (12; 12a) for a motor vehicle hydraulic brake system (10) comprising
a force input element (22; 22a) connected to a brake pedal (126b), a housing (20; 20a) and a primary piston (60; 60a) displaceable in the housing (20; 20a), the primary piston (60; 60a) together with the housing enclosing a primary pressure chamber (78; 78a) for generating a hydraulic brake pressure,
a pedal simulation device connected to the force input element (22; 22a),
a pedal actuation detection device (90; 90a) for detecting the pedal actuation and an actuating force booster stage for exerting an actuating force on the primary piston (60; 60a),
wherein during normal operation the force input element (22; 22a) is mechanically uncoupled from the primary piston (60; 60a) and the actuating force booster stage exerts an actuating force on the primary piston (60; 60a) in accordance with the detected pedal actuation and
wherein in the event of failure of the actuating force booster stage the force input element (22; 22a) is workingly connectable to the primary piston (60; 60a),
wherein, starting from the primary piston (60; 60a), a contact extension (64; 64a) extends towards the force input element (22; 22a),
wherein during normal operation the contact extension (64; 64a) is held by release gap (s) at a distance from the force input element (22; 22a), and in the event of failure of the actuating force booster stage the force input element (22; 22a) after travelling the release gap (s) is applied workingly against the contact extension (64; 64a; 64b) and
wherein the actuating force booster stage generates the actuating force hydraulically,
**characterized in that** the actuating force booster stage comprises a control piston (52; 52a), which is guided in the housing (20; 20a) and which together with the primary piston (60; 60a) delimits an actuating pressure chamber (100; 100a) connected or connectable to a hydraulic pressure source (14), wherein during normal operation by means of the actuating pressure present in the actuating pressure chamber (100; 100a) the primary pressure piston (60; 60a) for generating the brake pressure is displaceable in the housing (20; 20a) and the control piston (52; 52a) is held stationary, and wherein in the event of failure of the actuating force booster stage the control piston (52; 52a) moves simultaneously with the primary pressure piston (60; 60a).

2. Braking force generator (12; 12a) according to claim 1,
**characterized in that** the pedal actuation detection device (90; 90a; 90b; 90c) is designed to detect the distance travelled by the brake pedal.

3. Braking force generator (12; 12a) according to one of the preceding claims,
**characterized in that** the pedal simulation device comprises a simulation spring arrangement, which upon a pedal actuation is compressible by the force input element (22; 22a).

4. Braking force generator (12; 12a) according to claim 3,
**characterized in that** the simulation spring arrangement is constructed with a first simulation spring (54; 54a) and a serially connected second simulation spring (56; 56a), wherein the first simulation spring (54; 54a) has a lower spring hardness than the second simulation spring (56; 56a) and wherein there is associated with the first simulation spring (54; 54a) a stop sleeve (58; 58a), which after compression of the first simulation spring (54; 54a) by a predetermined spring excursion, acts as a stop and prevents a further compression of the first simulation spring (54; 54a).

5. Braking force generator (12a) according to claim 4,
**characterized in that** the simulation spring arrangement comprises a third simulation spring (106a), which is disposed in line with the first (54a) and second simulation spring (56a) and has a higher spring hardness than the second simulation spring (56a).

6. Braking force generator (12; 12a) according to one of the preceding claims,
**characterized in that** the pedal simulation device comprises a damper device connected to the force input element (22; 22a).

7. Braking force generator (12; 12a) according to claim 6,
**characterized in that** the damper device comprises a damper housing (20; 20a) and a damper piston (26; 26a) guided in a fluid-proof manner in the damper housing (20; 20a), the damper piston (26; 26a) together with the damper housing (20; 20a) delimitung a damper chamber (32, 34; 32a, 34a) on each side and the two damper chambers (32, 34; 32a, 34a) being connected to one another fluidically, in particular pneumatically, by a fluid system (36; 36a).

8. Braking force generator (12; 12a) according to claim 7,
**characterized in that** the fluid system (36; 36a) comprises a throttle device (38; 38a) for throttling the flow of fluid from the one damper chamber (32; 32a) into the other damper chamber (34; 34a).

9. Braking force generator (12; 12a) according to claim 8,
**characterized in that** the fluid system (36; 36a) comprises a non-return valve (40; 40a) connected in parallel to the throttle device (38; 38a) in order to throttle the fluid flow only in one direction of flow between the damper chambers (32, 34; 32a, 34a) and to allow the fluid flow to pass substantially unimpeded in the opposite direction of flow.

10. Braking force generator (12a) according to one of the preceding claims,
**characterized in that** in the release gap (s) between the contact extension (64a) and the force input element (22a) a spring device (110a), in particular a cup spring assembly (110a), is disposed, which in the event of failure of the actuating force booster stage damps the application of the force input element (22a) against the contact extension (64a).

11. Braking force generator (12; 12a) according to one of the preceding claims,
**characterized in that** the control piston (52; 52a) lies via a stop sleeve (58; 58a) against a stop (47; 47a) provided in the housing (20; 20a).

12. Braking force generator (12; 12a) according to one of the preceding claims,
**characterized in that** the contact extension (64; 64a) extends through the actuating pressure chamber (100; 100a) and therefore reduces the hydraulic filling volume of the actuating pressure chamber (100; 100a).

13. Braking force generator (12; 12a) according to one of the preceding claims,
**characterized in that** the control piston (52; 52a) has a central through-opening, through which the contact extension (64; 64a) extends in a sealingly guided manner.

14. Braking force generator (12; 12a) according to one of the preceding claims,
**characterized in that** the hydraulic pressure source (14) comprises a hydraulic valve unit (92) adapted to be actuated in response to the pedal actuation.

15. Braking force generator (12) according to one of the preceding claims,
**characterized in that** the hydraulic pressure source (14) comprises a hydraulic pump (84), a pressure limiter (94) and an accumulator (96).

16. Braking force generator (12, 12a) according to one of the preceding claims,
**characterized by** a secondary piston (72; 72a), which is displaceable in the housing (20; 20a) and together with the housing (20; 20a) encloses a secondary pressure chamber (80; 80a) for generating a hydraulic brake pressure.

17. Motor vehicle hydraulic brake system (10),
**characterized by** a braking force generator (12; 12a;) according to one of the preceding claims.

## Revendications

1. Générateur de force de freinage (12 ; 12a) pour un système de freinage hydraulique (10) pour véhicule automobile comportant
- un organe d'admission de force (22 ; 22a), qui est couplé à une pédale de frein (126b),
- un carter (20 ; 20a) et un piston primaire (60 ; 60a) mobile dans le carter (20 ; 20a), le piston primaire (60 ; 60a) délimitant avec le carter (20 ; 20a) une chambre de pression primaire (78 ; 78a) pour générer une pression de freinage hydraulique,
- un dispositif de simulation de pédale, couplé avec l'organe d'admission de force (22 ; 22a),
- un dispositif de détection de l'actionnement de la pédale (90 ; 90a) destiné à détecter l'actionnement de la pédale, et
- un niveau d'amplification de la force d'actionnement destiné à exercer une force d'actionnement sur le piston primaire (60 ; 60a),
- sachant que, en cours de service normal, l'organe d'admission de force (22 ; 22a) est découplé mécaniquement du piston primaire (60 ; 60a) et le niveau d'amplification de la force d'actionnement exerce, en fonction de l'actionnement de la pédale détecté, une force d'actionnement sur le piston primaire (60 ; 60a) et
- en cas de défaillance du niveau d'amplification de la force d'actionnement, l'organe d'admission de force (22 ; 22a) est couplé en transmission de force avec le piston primaire (60 ; 60a),
- une saillie de contact (64 ; 64a) s'étendant depuis le piston primaire (60 ; 60a) vers l'organe d'admission de force (22 ; 22a),
- la saillie de contact (64 ; 64a) étant maintenue en cours de service normal à distance de l'organe d'admission de force (22 ; 22a) avec une fente d'air (s) et, en cas de défaillance du niveau d'amplification de la force d'actionnement, l'organe d'admission de force (22 ; 22a), après avoir traversé la fente d'air (s), venant en appui avec transmission de force contre la saillie de contact (64 ; 64a), et
- le niveau d'amplification de la force d'actionnement générant la force de freinage par voie hydraulique,
**caractérisé en ce que** le niveau d'amplification de la force d'actionnement comporte un piston de commande (52, 52a), qui est logé dans le carter (20 ; 20a) et qui, conjointement avec le piston primaire (60 ; 60a), délimite une chambre de pression d'actionnement (100 ; 100a), couplée ou apte à être couplée à une source de pression hydraulique (14), sachant qu'en cours de service normal, le piston primaire (60 ; 60a) peut être déplacé dans le carter (20 ; 20a) par la pression d'actionnement régnant dans la chambre de pression d'actionnement (100 ; 100a), pour générer la force de freinage, et le piston de commande (52, 52a) est maintenu de manière fixe localement, et sachant qu'en cas de défaillance du niveau d'amplification de la force d'actionnement, le piston de commande (52, 52a) est déplacé avec le mouvement du piston primaire (60 ; 60a).

2. Générateur de force de freinage (12 ; 12a) selon la revendication 1,
**caractérisé en ce que** le dispositif de détection de l'actionnement de la pédale (90 ; 90a ; 90b ; 90c) est réalisé pour détecter le trajet parcouru par la pédale de frein.

3. Générateur de force de freinage (12 ; 12a) selon l'une quelconque des revendications précédentes,
**caractérisé en ce que** le dispositif de simulation de pédale comporte un système de ressort de simulation, qui peut être comprimé lors d'un actionnement de la pédale par l'organe d'admission de force (22 ; 22a).

4. Générateur de force de freinage (12 ; 12a) selon la revendication 3,
**caractérisé en ce que** le système de ressort de simulation est conçu avec un premier ressort de simulation (54 ; 54a) et un deuxième ressort de simulation (56 ; 56a), monté en série, le premier ressort de simulation (54 ; 54a) ayant une dureté de ressort inférieure à celle du deuxième ressort de simulation (56, 56a) et le premier ressort de simulation (54 ; 54a) étant associé à un manchon de butée (58 ; 58a), qui, après compression du premier ressort de simulation (54 ; 54a) selon un débattement prédéterminé, fait fonction de butée et empêche le premier ressort de simulation (54 ; 54a) de se comprimer davantage.

5. Générateur de force de freinage (12a) selon la revendication 4,
**caractérisé en ce que** le système de ressort de simulation comporte un troisième ressort de simulation (106a), qui est monté en série avec le premier ressort de simulation (54a) et le deuxième ressort de simulation (56a) et qui comporte une dureté de ressort supérieure à celle du deuxième ressort de simulation (56a).

6. Générateur de force de freinage (12 ; 12a) selon l'une quelconque des revendications précédentes,
**caractérisé en ce que** le dispositif de simulation de pédale comporte un dispositif d'amortissement couplé avec l'organe d'admission de force (22 ; 22a).

7. Générateur de force de freinage (12 ; 12a) selon la revendication 6,
**caractérisé en ce que** le dispositif d'amortissement comporte un boîtier d'amortisseur (20 ; 20a) et un piston d'amortissement (26 ; 26a) guidé de manière étanche au fluide dans le boîtier d'amortisseur (20 ; 20a), le piston d'amortissement (26 ; 26a) délimitant, conjointement avec le boîtier d'amortisseur (20 ; 20a), des deux côtés respectivement une chambre d'amortissement (32, 34 ; 32a, 34a) et les deux chambres d'amortissement (32, 34 ; 32a, 34a) étant couplées l'une à l'autre de manière fluidique, en particulier pneumatique, via un système de fluide (36 ; 36a).

8. Générateur de force de freinage (12 ; 12a) selon la revendication 7,
**caractérisé en ce que** le système de fluide (36 ; 36a) comporte un dispositif d'étranglement (38 ; 38a) destiné à ralentir le flux de fluide à partir de l'une des chambres d'amortissement (32 ; 32a) vers l'autre chambre d'amortissement (34 ; 34a).

9. Générateur de force de freinage (12 ; 12a) selon la revendication 8,
**caractérisé en ce que** le système de fluide (36 ; 36a) comporte un clapet de non-retour (40 ; 40a), monté parallèlement au dispositif d'étranglement (38 ; 38a), afin de ralentir le flux de fluide uniquement dans une direction d'écoulement entre les chambres d'amortissement (32, 34 ; 32a, 34a) et pour laisser passer le flux en grande partie sans obstacle dans la direction d'écoulement opposée.

10. Générateur de force de freinage (12a) selon l'une quelconque des revendications précédentes,
**caractérisé en ce que**, dans la fente d'air (s) entre la saillie de contact (64a) et l'organe d'admission de force (22a), est agencé un dispositif de ressort (110a), en particulier un paquet de ressorts Belleville (110a) qui, en cas de défaillance du niveau d'amplification de la force d'actionnement, amortit l'appui de l'organe d'admission de force (22a) contre la saillie de contact (64a).

11. Générateur de force de freinage (12 ; 12a) selon l'une quelconque des revendications précédentes,
**caractérisé en ce que** le piston de commande (52, 52a) est en appui par l'intermédiaire d'un manchon de butée (58 ; 58a) contre une butée (47 ; 47a) prévue dans le carter (20 ; 20a).

12. Générateur de force de freinage (12 ; 12a) selon l'une quelconque des revendications précédentes,
**caractérisé en ce que** la saillie de contact (64 ; 64a) s'étend à travers la chambre de pression d'actionnement (100 ; 100a) et, de ce fait, réduit le volume de remplissage hydraulique de la chambre de pression d'actionnement (100 ; 100a).

13. Générateur de force de freinage (12 ; 12a) selon l'une quelconque des revendications précédentes,
**caractérisé en ce que** le piston de commande (52, 52a) comporte un trou débouchant central, à travers lequel la saillie de contact (64 ; 64a) passe de manière étanche.

14. Générateur de force de freinage (12 ; 12a) selon l'une quelconque des revendications précédentes,
**caractérisé en ce que** la source de pression hydraulique (14) comporte une unité de vanne hydraulique (92) pouvant être commandée en fonction de l'actionnement de la pédale.

15. Générateur de force de freinage (12) selon l'une quelconque des revendications précédentes,
**caractérisé en ce que** la source de pression hydraulique (14) comporte une pompe hydraulique (84), un limiteur de pression (94) et un réservoir de pression (96).

16. Générateur de force de freinage (12 ; 12a) selon l'une quelconque des revendications précédentes,
**caractérisé par** un piston secondaire (72 ; 72a), qui est mobile dans le carter (20 ; 20a) et qui délimite avec le carter (20 ; 20a) une chambre de pression secondaire (80 ; 80a) pour générer une pression de freinage hydraulique.

17. Système de freinage hydraulique (10) pour véhicule automobile,
**caractérisé par** un générateur de force de freinage (12 ; 12a) selon l'une quelconque des revendications précédentes.
